# EUROPÄISCHE PATENTANMELDUNG

(11) **EP 3 098 024 A1**
(43) Veröffentlichungstag der Anmeldung: **30.11.2016**
(21) Anmeldenummer: 16171660.0
(22) Anmeldetag: 27.05.2016
(51) Int. Cl.: B23Q 3/06, B25B 1/00

(54) **SPANNVORRICHTUNG**

(30) Priorität: 29.05.2015 DE 102015108541
(71) Anmelder: Kaltenbach GmbH + Co. KG, 79539 Lörrach (DE)
(72) Erfinder: LIEBSCHER, Erik, 79713 Bad Säckingen (DE); RASCH, Jan, 79418 Schliengen (DE); VAN LINN, Alexander, 79400 Wollbach (DE)
(74) Vertreter: Maucher Jenkins Patent- und Rechtsanwälte

(57) **Zusammenfassung**

Bei einer Spannvorrichtung zum Spannen von Werkstücken zur Bearbeitung in einer Werkzeugmaschine, die Spannvorrichtung umfassend einen eine Materialauflagefläche bildenden Grundkörper und mindestens erste und zweite an dem Grundkörper angeordnete Spannbacken, wobei die ersten und zweiten Spannbacken relativ zueinander verstellbar sind, so dass ein Werkstück auf der Materialauflagefläche zwischen den ersten und zweiten Spannbacken einspannbar ist, wird vorgeschlagen, dass mindestens eine der Spannbacken unter die Materialauflagefläche versenkbar ist.

## Beschreibung

### Gebiet der Erfindung

Die Erfindung betrifft eine Spannvorrichtung zum Spannen von Werkstücken zur Bearbeitung in einer Werkzeugmaschine, wobei die Spannvorrichtung einen eine Materialauflagefläche bildenden Grundkörper und mindestens erste und zweite an dem Grundkörper angeordnete Spannbacken, welche relativ zueinander so verstellbar sind, dass ein Werkstück auf der Materialauflagefläche zwischen den ersten und zweiten Spannbacken einspannbar ist, umfasst.

### Hintergrund

Derartige Spannvorrichtungen sind aus dem Stand der Technik bekannt und ermöglichen das Spannen von Werkstücken in Werkzeugmaschinen.

Aus der DE 33 12 491 ist ein Spannstock bekannt, der aus einem, auf einem Maschinentisch befestigten Spannstockkörper und verstellbaren, verschiebbar geführten Spannbacken besteht. Die Spannbacken laufen in mehreren, in Führungsrichtung nebeneinander liegenden Führungsnuten.

Aus DE 10 2009 019 267 ist eine Spannvorrichtung bekannt, welche einen Antrieb zum Verstellen beweglicher Spannbacken aufweist und mittels einer Bearbeitungseinrichtung in Richtung einer Führungseinrichtung verschoben werden kann. Der Verschiebemechanismus ist dabei derart eingerichtet, dass die Spanneinrichtung über eine eingespannte Profilstange (das Werkstück selbst) durch die Bearbeitungseinrichtung mitverschoben wird. Aus derselben Druckschrift ist bekannt, dass die Spannvorrichtungen mittels einer an der Bearbeitungseinrichtung angeordneten, motorisierten Stelleinheit einstellbar sind. Dabei betrifft die Einstellung der Spannvorrichtung die Einstellung des Abstandes der beiden Spannbacken.

Aus EP 1 555 084 A1 ist eine Spannvorrichtung bekannt, die motorisch angetriebene, autonom ansteuerbaren Spannbacken aufweist und die längs eines Maschinenbetts einer Werkzeugmaschine beweglich ist. Zum Antrieb verfügt diese Spannvorrichtung über mehrere motorische Stelltriebe innerhalb ihrer Bauform.

Generell sollten Spannvorrichtungen derart ausgestaltet sein, dass zu bearbeitende Werkstücke einfach eingespannt werden können und eine Bearbeitung des Werkstückes nicht behindert wird. Insbesondere sollen Maschinenrüstzeiten zwischen Werkstücken mit wechselnden Geometrien und Fertigungsvorgaben verkürzt werden. Auf diese Weise soll die Auslastung der Werkzeugmaschinen optimiert, die Bedienung vereinfacht und die Bearbeitungszeit verkürzt werden.

Die vorliegende Erfindung hat zur Aufgabe, eine dementsprechend verbesserte Spannvorrichtung bereitzustellen.

Diese Aufgabe wird durch die in den unabhängigen Ansprüchen angegebene Erfindung gelöst. Vorteilhafte Ausgestaltungen sind in den Unteransprüchen gegeben.

### Kurzbeschreibung der Erfindung

Erfindungsgemäß beschrieben ist eine Spannvorrichtung, bei der mindestens eine der Spannbacken unter eine Materialauflagefläche versenkbar ist.

Die mindestens eine, versenkbare Spannbacke ermöglicht die Vorbeifahrt/Überfahrt einer Vorschubeinrichtung einer Werkzeugmaschine, beispielsweise eines Messwagens oberhalb der Spannvorrichtung. Auf diese Weise können Konflikte mit weiteren, innerhalb der Werkzeugmaschine beweglichen Komponenten minimiert werden. Dies führt zu einer Reduzierung der Bearbeitungszeit und somit von Herstellkosten.

Des Weiteren gestattet die vorliegende Erfindung einen Verzicht auf Eingriffsnuten innerhalb der Materialauflagefläche und/oder der Materialanlagefläche, die es einem Greifer einer Vorschubeinrichtung /Messwagen ermöglichen würden, ein Werkstück zuzuführen und in der Spannvorrichtung zu positionieren. Durch das Versenken der Spannbacke kann ein Greifer einer Vorschubeinrichtung ungehindert ein Werkstück innerhalb der Spannvorrichtung positionieren, da zunächst keine Spannbacke im Weg ist. Der Verzicht auf Eingriffsnuten in Materialauflage- und Materialanlagefläche hat weiterhin den Vorteil, dass ein spannkraftbedingtes Verrutschen, Verkanten oder Hinauslaufen besonders kleiner Werkstücke innerhalb der Spannvorrichtung verhindert wird. Die Eingriffsnuten sind besonders bei sehr kleinen Werkstücken erforderlich, damit der Greifer einer Vorschubeinrichtung oder eines Messwagens ein Werkstück im Bereich der Spannvorrichtung noch beidseitig umfassen kann. Bei einem herkömmlichen Spannvorgang in den bekannten Ausgestaltungsformen besteht bei kleinen Werkstücken die Gefahr, dass sie durch die Spannkräfte in die Nut(en) der Spannbacke(n) hineingedrückt werden und Schaden nehmen. Dies wird erfindungsgemäß dadurch verhindert, dass die eine bewegliche Spannbacke/Festanschlag bei der Positionierung des Werkstückes nach unten versenkt wird und so der Vorschubeinrichtung, bzw. deren Greifern, Platz macht. Sind das Werkstück in Position gebracht und der Messwagen/Greifer entfernt worden, kann die Spannbacke/der Festanschlag wieder hochgefahren werden, um das Werkstück zu spannen.

Ein weiterer Vorteil besteht darin, dass das Be- und Entladen der Spannvorrichtung vereinfacht werden kann. Werkstücke können bei versenkbarem Spannbacken jeweils auch seitlich zu- oder abgeführt werden. Es ist somit möglich, auf ein Quertransportsystem zu verzichten, welches ansonsten vor der Maschine angeordnet oder in die Werkzeugmaschine integriert werden müsste. Die Werkzeugmaschine kann somit deutlich kompakter ausgestaltet werden. Auch die Transportwege des Werkstückes können verkürzt und somit die Bearbeitungszeit reduziert werden. Die versenkbare Spannbacke erweitert somit die Belademöglichkeiten und somit die Freiheitsgrade einer Werkzeugmaschine bei der Werkstückbearbeitung.

Schließlich hat das Versenken der Spannbacke im Zusammenspiel mit einer Steuereinrichtung, die das Versenken der Spannbacken mehrerer Spannvorrichtungen separat und autonom steuern kann, den Vorteil, dass einzelne Spannvorrichtungen zumindest einseitig als reine Auflageeinrichtungen genutzt werden können, was bei Werkstücken mit komplexer Geometrie das Einspannen und die Bearbeitung erleichtern kann.

In einer Ausgestaltung der Erfindung umfasst die Spannvorrichtung eine Antriebsvorrichtung zum Verstellen der Spannbacken relativ zueinander und/oder relativ zum Grundkörper und zum Bewegen der Spannvorrichtung innerhalb einer Werkzeugmaschine. Somit kann die Spannvorrichtung unabhängig von den (beweglichen) Bearbeitungseinrichtungen einer Werkstückmaschine bewegt und positioniert werden. Vorteilhaft ist auch der entfallende Aufwand für eine manuelle Vorpositionierung der Spannvorrichtung, sowie das manuelle Verstellen der Spannbacken. Es kann somit ein höherer Automatisierungsgrad erreicht werden.

Die erfindungsgemäße Spannvorrichtung ist somit mit Vorteil für Werkzeugmaschinen geeignet, die über eine oder mehrere bewegliche Bearbeitungseinrichtungen verfügen. In diesen Maschinen, in denen mehrere Bearbeitungsschritte parallel ausgeführt werden und somit mehrere Bearbeitungseinrichtungen gleichzeitig tätig sind, kann es von Vorteil sein, wenn je nach Komplexität des zu bearbeitenden Werkstückes, die Spannvorrichtung(en) so positioniert/gesteuert werden können, dass die Bearbeitungseinrichtungen alle Bearbeitungspositionen erreichen können. Bei feststehenden Spannvorrichtungen kann es hingegen zwischen den Bearbeitungseinrichtungen und den Spannvorrichtungen innerhalb einer Materialposition zu Konflikten kommen. Mit anderen Worten kann eine Bearbeitungseinrichtung eine vorgesehene Bearbeitung nicht ausführen, weil eine feststehende Spannvorrichtung im Wege ist oder weil die vorgesehene Bearbeitung im Bereich der Spannvorrichtung liegt. In diesem Fall müsste die Spannvorrichtung dann manuell umpositioniert werden. Dieser Nachteil wird durch die erfindungsgemäße Spannvorrichtung vermieden.

Durch die Beweglichkeit der Spannvorrichtungen selbst und der Spannbacken können diese durch eine Steuereinrichtung so (vor-)positioniert werden, dass bei der Bearbeitung innerhalb einer Materialposition keine Konflikte zwischen den Bearbeitungseinrichtungen und der/den Spannvorrichtungen entstehen. Es können auf diese Weise stets eine maximale Anzahl von Bearbeitungen innerhalb einer Materialposition ausgeführt werden. Somit können Bearbeitungen parallel anstatt sequentiell durchgeführt werden. Dies führt zu Ersparnis von Bearbeitungszeit und damit auch zu Ersparnis von Herstellungskosten.

In einer Ausgestaltung der Erfindung umfasst die Antriebsvorrichtung eine Hub-/Senkvorrichtung zum Versenken eines beweglichen Spannbackens. Diese Ausgestaltung ermöglicht das automatisierte Versenken/Anheben der versenkbaren Spannbacke.

In einer weiteren Ausgestaltungsform der Erfindung ist vorgesehen, dass eine der Spannbacken als Festanschlag ausgebildet ist. Diese Ausgestaltungsform ermöglicht höhere Spannkräfte.

In einer Ausgestaltung der Erfindung umfasst die Hub-/Senkvorrichtung einen Antriebskolben, einen Stempel und ein Schubgestänge in robuster Ausführung zur Aufnahme hoher Lasten. Insbesondere ist dabei der untere Bereich des Schubgestänges der Hub-Senkvorrichtung mit dem Stempel drehbar gekoppelt und der obere Bereich des Schubgestänges mit dem Festanschlag drehbar verbunden. Der untere Bereich des Schubgestänges wird in einem Führungsschlitz, welcher sich im Grundkörper in dessen unteren Bereich befindet, geführt. Durch den Einsatz des Schubgestänges kann stets eine große Kraft von dem Antriebskolben auf den Festanschlag übertragen werden.

In einer weiteren vorteilhaften Ausgestaltung der Erfindung bildet der äußere Bereich des Führungsschlitzes in einer Betriebsstellung des Festanschlages einen Anschlag für das Schubgestänge. Dadurch wird das Schubgestänge in vertikaler Position gehalten und verriegelt den Festanschlag in seiner Betriebsstellung. Dadurch kann auf einen eigenen Arretiermechanismus verzichtet werden.

In einer Ausgestaltungsform der Erfindung ist die Materialauflagefläche des Grundkörpers durch eine oder mehrere Walzen oder Rollen gebildet, auf denen ein Werkstück in einer Vorschubrichtung abrollbar ist. Die Rollen ermöglichen eine reibungsarme Bewegung der Spannvorrichtung relativ zu ruhendem oder sich mit einer anderen Geschwindigkeit bewegendem Material. Optional können die Rollen über entsprechende Bremsvorrichtungen gebremst/blockiert werden. In einer weiteren Ausgestaltungsform der Erfindung sind angetriebene Rollen vorgesehen.

In einer Ausgestaltung de Erfindung ist vorgesehen, dass die zweite Spannbacke mit einem Steg verbunden ist, wobei der Steg um eine Achse schwenkbar ist, so dass die zweite Spannbacke unter die Materialauflagefläche versenkbar ist. Vorteilhaft ist, dass der Steg einen Bereich der Materialauflagefläche bilden kann und in Kombination mit dem Festanschlag hohe Spannkräfte übertragen kann.

In einer Ausgestaltung der Erfindung ist der Steg mit dem Festanschlag auf der dem Festanschlag gegenüberliegenden Seite verschwenkbar gelagert. Die Lagerung kann durch eine Drehlagerung gebildet sein. Die Lagerung ermöglicht das Verschwenken/eine Schwenkbewegung des Steges und somit des Festanschlages auf einer Kreisbahn um die Lagerachse. Durch eine Schwenkbewegung nach unten kann der Festanschlag unter die Materialauflagefläche versenkt werden. Diese Ausgestaltung zeichnet sich insgesamt durch hohe Robustheit aus.

In einer weiteren Ausgestaltung der Erfindung weist der Grundkörper eine einer Unterseite des Steges gegenüberliegende Auflagefläche auf, auf welcher die Unterseite des Steges im versenkten Zustand der zweiten Spannbacke/des Festanschlages zu liegen kommt und durch die das Verschwenken des Steges gegenüber dem Grundkörper begrenzt wird. Bei einer Schwenkbewegung des Steges/Festanschlages in den unteren Abschnitt der Spannvorrichtung bewirken die Auflagekanten eine Begrenzung der Bewegung und bieten dem Steg eine Auflagefläche. Auf diese Weise wird erreicht, dass die Gewichtskraft des Steges/ Festanschlages im versenkten Zustand nicht von einer Hub-/Senkvorrichtung abgestützt werden muss.

In einer weiteren Ausgestaltungsform der Erfindung umfasst der Festanschlag eine Platte oder eine oder mehrere Walzen oder Rollen. Der Festanschlag bildet eine Materialanlagefläche, an der ein eingespanntes Werkstück in einer Betriebsstellung des Festanschlages anliegt. Die Betriebsstellung des Festanschlages ist die Position im nicht-versenkten und vollständig aufgerichteten Zustand. In der Betriebsstellung steht Materialanlagefläche des Festanschlages senkrecht auf der Materialauflagefläche. Vorteilhafterweise kann in dieser Ausführungsform auf Einfuhrschrägen verzichtet werden. Die Rollen am Festanschlag ermöglichen zudem eine reibungsarme Relativbewegung des Werkstücks zur Spannvorrichtung. Die Rollen können in einer Ausführungsform mittels Exzenterschrauben einstellbar sein.

In einer Ausführungsform der Erfindung verfügt die Antriebsvorrichtung der Spannvorrichtung über einen Antrieb und eine Kraftübertragungsvorrichtung, welche sich innerhalb/unterhalb des Grundkörpers befindet. Diese dient dem autonomen Bewegen der Spannvorrichtung. In einer bevorzugten Ausgestaltung ist die Kraftübertragungsvorrichtung durch ein Antriebsritzel an der Unterseite des Grundkörpers gebildet, welches in eine Zahnschiene innerhalb der Werkzeugmaschine eingreift. Die Spannvorrichtung ist somit aus eigener Kraft entlang der Zahnschiene und/oder innerhalb der Werkzeugmaschine beweglich und autonom steuerbar. Als vorteilhaft erweist sich dabei, dass auf einen kinematisch anspruchsvollen Bewegungsmechanismus innerhalb der Werkzeugmaschine, in der die Spannvorrichtung verwendet wird, verzichtet werden kann.

In einer weiteren Ausgestaltung der Erfindung sind die beweglichen Spannbacken auswechselbar. Die Spannbacken können dabei auch während eines Arbeitsganges, sofern gerade nichts gespannt ist, ausgewechselt werden. Besonders vorteilhaft ist, dass sowohl der eine bewegliche Spannbacken, als auch der versenkbare Spannbacken auswechselbar sein können. Dies ermöglicht besonders die schnelle Anpassung an die Erfordernisse des Werkstückes (Größe, Form). Gemäß einem weiteren Aspekt der Erfindung ist die Spannvorrichtung durch eine Steuereinrichtung einer Werkzeugmaschine steuerbar. Bewegungen innerhalb der verschiedenen Freiheitsgrade (Bewegen der Spannvorrichtung innerhalb der Werkzeugmaschine, Verstellen der Spannbacken zum Einspannen eines Werkstückes, Versenken des einen beweglichen Spannbackens unter die Materialauflagefläche) können separat voneinander gesteuert werden. Die Steuerung kann dabei sowohl vor der Bearbeitung, als auch während der Bearbeitung des Werkstückes durch die Bearbeitungseinrichtungen der Werkzeugmaschine erfolgen. Auf diese Weise ist eine vollautomatisierte Spannvorrichtung geschaffen, die den Automatisierungsgrad von Werkzeugmaschinen verbessert. Durch die flexible Steuerbarkeit/Automatisierung lassen sich die Bearbeitungszeiten von Werkstücken in Werkzeugmaschinen verkürzen.

Erfindungsgemäß ist außerdem eine Werkzeugmaschine geschaffen, die neben mindestens einer erfindungsgemäßen Spannvorrichtung mindestens eine Bearbeitungseinheit mit einer Antriebsvorrichtung, insbesondere zum Verstellen oder Bewegen der Bearbeitungseinrichtung innerhalb der Werkzeugmaschine umfasst, wobei die Antriebsvorrichtungen der Spannvorrichtung und der Bearbeitungsvorrichtung voneinander unabhängig sind und jeweils ein Verstellen der Spannvorrichtung relativ zu der Bearbeitungseinrichtung gestatten. Aufgrund der beschriebenen Merkmale und Eigenschaften der Spannvorrichtung können bei der Bewegung der Bearbeitungsvorrichtungen während der Werkstückbearbeitung mögliche Kollisionen zwischen der oder den Bearbeitungseinrichtungen und der Spannvorrichtung vermieden werden.

Die Steuerung der Spannvorrichtung kann durch eine zentrale Steuerungseinrichtung der Werkzeugmaschine erfolgen.

Nachstehend ist anhand der Zeichnungen ein Ausführungsbeispiel der Erfindung näher beschrieben. Es zeigt:

### Figurenbeschreibung

Figur 1 zeigt eine perspektivische Ansicht einer beispielhaften Ausführungsform der Erfindung.
Figur 2 zeigt eine Seitenansicht einer beispielhaften Ausführungsform der Erfindung.
Figur 3 zeigt eine weitere perspektivische Ansicht einer beispielhaften Ausführungsform der Erfindung.
Figur 4 zeigt eine perspektivische Schnittdarstellung einer beispielhaften Ausführungsform der Erfindung.

Beschreibung der Erfindung anhand einer beispielhaften, in den Zeichnungen beschriebenen Ausführungsform

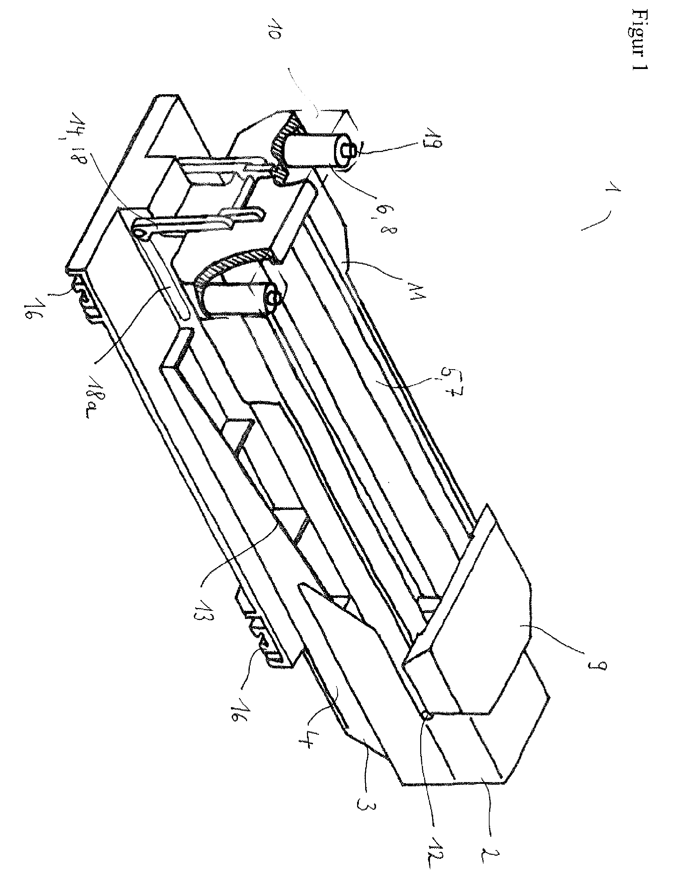

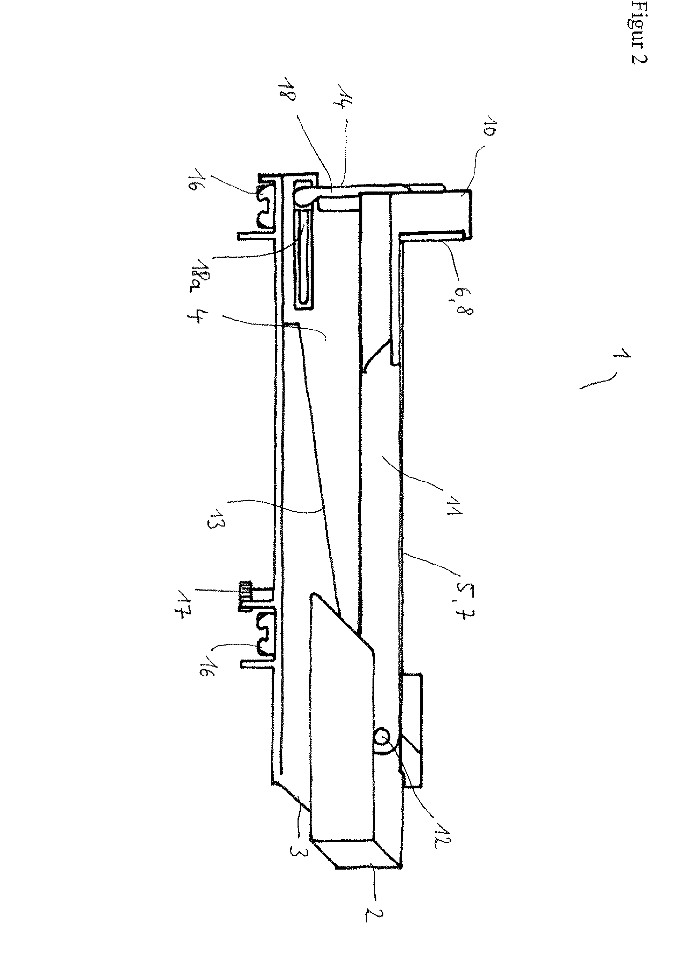

Die Figuren 1 bis 3 zeigen schematisch eine Spannvorrichtung gemäß einer Ausgestaltung der Erfindung in verschiedenen Perspektiven. Die Spannvorrichtung 1 umfasst einen oberen Abschnitt 2 und einen unteren Abschnitt 3. Der untere Abschnitt 3 umfasst einen Grundkörper 4 mit einer horizontalen Materialauflagefläche 5 und einer vertikalen Materialanlagefläche 6. Die Materialauflagefläche 5 weist zwei parallel angeordnete voneinander beabstandete erste Rollen 7 auf. Ebenso weist die Materialanlagefläche 6 parallel angeordnete und voneinander beabstandete zweite Rollen 8 auf.

Die Materialauflagefläche 5 wird durch gegenüberliegende erste und zweite Spannbacken 9,10 begrenzt. Die erste Spannbacke 9 ist längs der Materialauflagefläche 5, d.h. in Richtung zur gegenüberliegenden Spannbacke 10, beweglich. Die zweite Spannbacke 10 wird durch einen Festanschlag 10 gebildet.

Der Festanschlag 10 bildet die Materialanlagefläche 6 und somit eine sogenannte Datumslinie (Schnittlinie der Materialauflagefläche 5 und der Materialanlagefläche 6).

In einer Ausführungsform sind die erste Spannbacke 9 und der Festanschlag 10 auswechselbar.

Die Rollen 7,8 gestatten es, ein zu bearbeitendes Werkstück reibungsarm zu transportieren.

Der Festanschlag 10 ist unter die Materialauflagefläche versenkbar. Gemäß Figur 1 befindet sich der Festanschlag 10 der Spannvorrichtung 1 in einer Betriebsstellung zum Spannen eines Werkstückes. Die Betriebsstellung ist dadurch gegeben, dass der Festanschlag hochgeklappt oder ausgefahren ist, so dass sich die durch den Festanschlag 10 gebildete Materialanlagefläche 6 in vertikaler Position befindet. Mit anderen Worten bilden die Materialauflagefläche 5 und die Materialanlagefläche 6 in der Betriebsstellung einen rechten Winkel.

Im illustrierten Beispiel ist der Festanschlag 10 über einen Steg 11 mit der gegenüberliegenden Seite des Grundkörpers 4 mittels einer Drehlagerung mit einer Drehachse 12 verbunden. Die Drehlagerung ermöglicht das Abklappen / Versenken des zweiten Spannbackens/Festanschlages 8 unter die Materialauflagefläche 5. Zur unteren Begrenzung der Bewegung des Festanschlages sind Auflagekanten 13 vorgesehen. Diese stützen den Festanschlag 10 in versenkter Position.

Die Drehachse 12 befindet sich auf der Seite der beweglichen Spannbacke 9 etwas oberhalb der Flucht der Auflagekanten 13. Beim Versenken des zweiten Spannbackens 10 kommt der Steg 11 auf den Auflagekanten 13 zu liegen. Mit anderen Worten führt der fest mit dem Steg 11 verbundene Festanschlag 10 beim Versenken eine Schwenkbewegung um die Drehachse 12 aus. Die Schwenkbewegung wird im unteren Abschnitt 3 der Spannvorrichtung 1 durch die Auflagekanten 11 begrenzt.

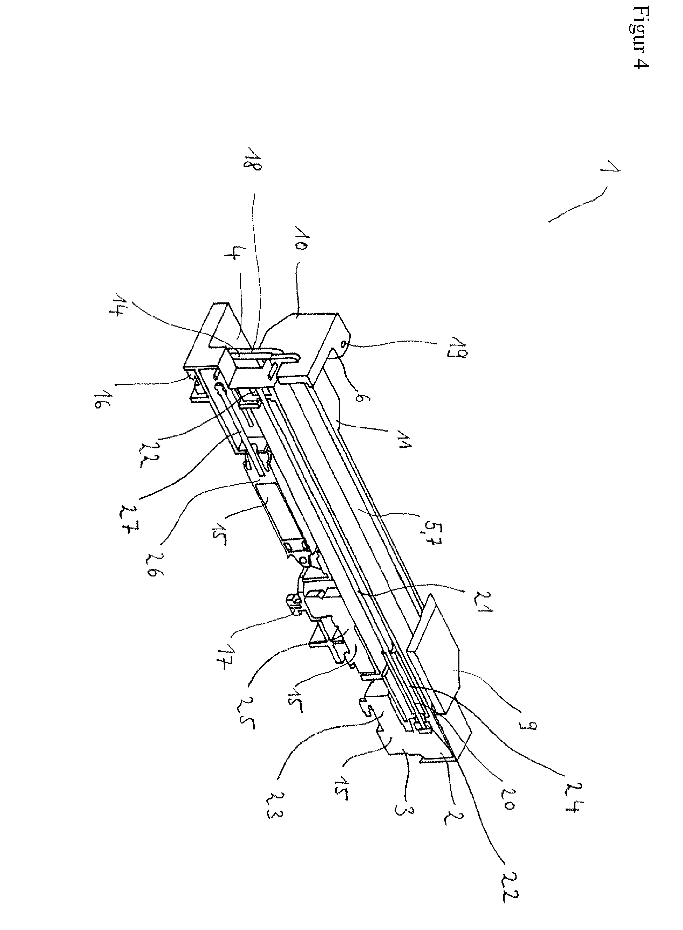

Die Figur 4 zeigt schematisch einen Querschnitt durch die Spannvorrichtung 1. Im Inneren des Grundkörpers 4 befindet sich eine Antriebsvorrichtung 15. Die Antriebsvorrichtung 15 umfasst in der dargestellten Ausführungsform eine Hub-Senkvorrichtung 14, eine Kraftübertragungsvorrichtung 17 und einen Spindelantrieb 20. Die Antriebsvorrichtung 15 kann darüber hinaus noch weitere Komponenten wie zum Beispiel Rollenantriebe zum Antreiben der Rollen 7,8 oder Kühlmittelpumpen umfassen.

Die Antriebe können durch hydraulische, elektrische oder pneumatische Vorrichtungen ausgebildet sein. Auch können innerhalb der Spannvorrichtung 1 mehrere unterschiedliche Antriebsformen Verwendung finden. In der dargestellten Bauform sind alle Komponenten der Antriebsvorrichtung 15 liegend, d.h. mit ihrer längeren Seite parallel zur Unterseite des Grundkörpers 4 verbaut, um eine möglichst flache Bauform der Spannvorrichtung 1 zu gewährleisten.

Das Versenken des Festanschlages 10 erfolgt mittels der Hub-/Senkvorrichtung 14, welche unterhalb des Festanschlages 10 angeordnet ist. Die Hub-/Senkvorrichtung 14 ist in der skizzierten Form in einem außenliegenden Abschnitt des Grundkörpers 4, angeordnet und über das Schubgestänge 18 mit dem Festanschlag 10 kraftschlüssig verbunden. In der dargestellten Ausführungsform umfasst die Hub-/Senkvorrichtung 14 einen Antriebskolben 26, einen Stempel 27 und ein Schubgestänge 18 zum Versenken des Festanschlages 10. Das Schubgestänge 18 umfasst einen unteren Bereich und einen oberen Bereich. Der untere Bereich des Schubgestänges 18 ist mit dem Stempel 27 drehbar verbunden und überträgt die Kraft des Antriebskolbens 26 auf den Festanschlag 10. Dazu ist das Schubgestänge 18 im oberen Bereich ebenfalls drehbar mit dem Festanschlag 10 verbunden. Der untere Bereich des Schubgestänges 18 wird in einem Führungsschlitz 18a geführt, welcher sich im unteren Abschnitt der Spannvorrichtung 2, bzw. im unteren Bereich des Grundkörpers 4 befindet.

In der skizzierten Betriebsstellung des Festanschlages 10 ist der Stempel 27 des Antriebskolbens 26 maximal ausgefahren und hält das Schubgestänge 18 der Hub-/Senkvorrichtung 14 in vertikaler Position. Der äußere Bereich des Führungsschlitzes 18a bildet einen Anschlag für den mit dem Stempel verbundenen unteren Bereich des Schubgestänges 18. Der Festanschlag 10 ist somit fixiert und kommt ohne eine zusätzliche Verriegelung aus.

In der Betriebsstellung des Festanschlages 10 erstreckt sich das Schubgestänge 18 in vertikaler Richtung, d.h. senkrecht zur Materialauflagefläche 5. Im versenkten oder eingeklappten Zustand des Festanschlages 10 (nicht dargestellt) befindet sich dieser vollständig unter der Materialauflagefläche 5. Die Materialauflagefläche 5 ist in diesem Zustand nur noch einseitig durch die erste bewegliche Spannbacke 9 begrenzt. Dies ermöglicht ein ungehindertes Be- und Entladen, sowie ein ungehindertes Positionieren/Umfassen eines Werkstückes durch eine Vorschubeinrichtung.

Die Kraftübertragungsvorrichtung 17 umfasst einen Antrieb 25 und ein Antriebsritzel 17. Die Kraftübertragungsvorrichtung 17 ist an der Unterseite des Grundkörpers 4 der Spannvorrichtung 1 angeordnet. Die. Vorzugsweise greift das Antriebsritzel 17 in eine, in einem Maschinenbett oder einer Führungseinrichtung der Werkzeugmaschine angeordnete, Zahnstange, Zahnschiene oder ähnliches ein.

Der Spindelantrieb 20 umfasst eine Schraubspindel 21, einen Spindelmotor 23 und ein Übertragungselement 24. Der Spindelantrieb 20 dient zum Antrieb der beweglichen ersten Spannbacke 9 entlang der Materialauflagefläche 5 und relativ zu dem Festanschlag 10.

Die Schraubspindel 21 verläuft parallel zur Materialanlagefläche 5 in einem oberen Bereich des Grundkörpers 4. Sie ist zu beiden Stirnseiten des Grundkörpers in Lagersockeln 22 abgestützt. Der Spindelantrieb 20 wird durch den Spindelmotor 23 angetrieben. Das Übertragungselement 24 stellt eine kraftschlüssige Verbindung zu der ersten, beweglichen Spannbacke 9 her.

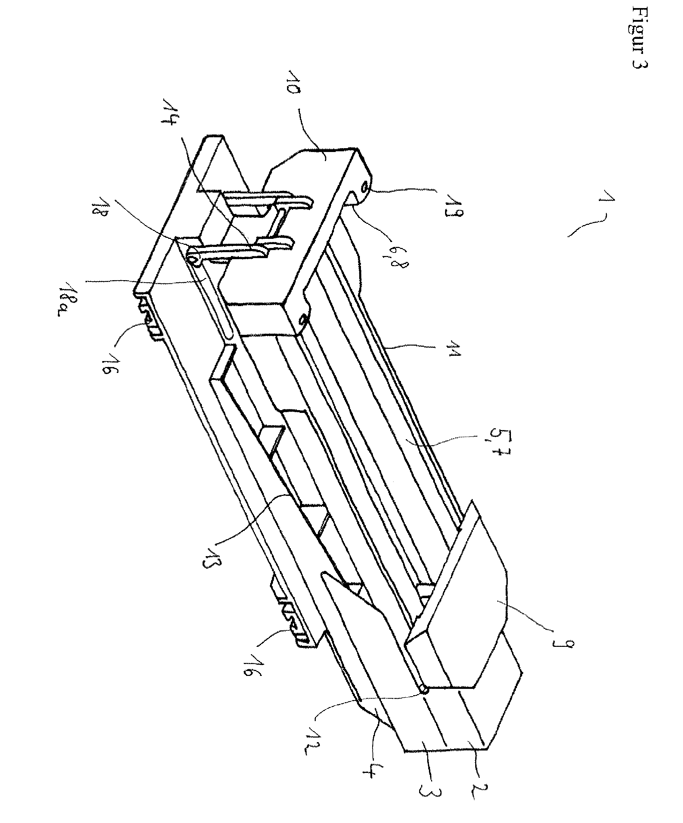

Wie bereits in den Figuren 1-3 zu sehen, ist die erste Spannbacke 9 entlang der Materialauflagefläche 5 und relativ zu dem Festanschlag 10 beweglich, wobei sich die Spannbacke 9 oberhalb der Rollen 7 bewegt. Wie auch in Figur 3 dargestellt erstrecken sich die die Materialauflagefläche 5 bildenden erste Rollen/Walzen 9 entlang der gesamten Einspannbreite der Spannvorrichtung 1.

Die Materialanlagefläche 6, beziehungsweise in einem Festanschlag 10 befindliche zweite Rollen 8, sind mittels Exzenterschrauben 19 justierbar.

In einem unteren Abschnitt 3 der Spannvorrichtung 1, umfasst die Spannvorrichtung 1 mehrere Führungsnuten 16 zum Führen der Spannvorrichtung 1 innerhalb, oder entlang einer Führungseinrichtung einer Werkzeugmaschine. Im gezeigten Beispiel sind die Führungsnuten 16 in den Außenbereichen der Unterseite des Grundkörpers 4 angeordnet.

### Bezugszeichenliste

- 1: Spannvorrichtung
- 2: oberer Abschnitt der Spannvorrichtung
- 3: unterer Abschnitt der Spannvorrichtung
- 4: Grundkörper
- 5: Materialauflagefläche
- 6: Materialanlagefläche
- 7: erste Rollen/Walzen
- 8: zweite Rollen/ Walzen
- 9: bewegliche Spannbacke/ erste Spannbacke
- 10: Festanschlag/ zweite Spannbacke
- 11: Steg
- 12: Drehpunkt
- 13: Auflagekanten
- 14: Hub-/Senkvorrichtung
- 15: Antriebsvorrichtung
- 16: Führungsnuten
- 17: Kraftübertragungsvorrichtung/Antriebsritzel
- 18: Schubgestänge
- 18a: Führungsschlitz
- 19: Exzenterschrauben
- 20: Spindelantrieb
- 21: Schraubspindel
- 22: Lagersockel
- 23: Spindelmotor
- 24: Übertragungselement
- 25: Antrieb der Kraftübertragungsvorrichtung
- 26: Antriebskolben
- 27: Stempel

## Patentansprüche

1. Spannvorrichtung (1) zum Spannen von Werkstücken zur Bearbeitung in einer Werkzeugmaschine, die Spannvorrichtung (1)umfassend:
einen eine Materialauflagefläche (5) bildenden Grundkörper (4); und
mindestens erste und zweite an dem Grundkörper (4) angeordnete Spannbacken (9,10), wobei die ersten und zweiten Spannbacken (9,10) relativ zueinander verstellbar sind, so dass ein Werkstück auf der Materialauflagefläche (5) zwischen den ersten und zweiten Spannbacken (9,10)einspannbar ist;
**dadurch gekennzeichnet, dass**
mindestens eine der Spannbacken (9,10) unter die Materialauflagefläche (5) versenkbar ist.

2. Spannvorrichtung (1) nach Anspruch 1, **dadurch gekennzeichnet, dass** die Spannvorrichtung (1) eine Antriebsvorrichtung (15) zum Verstellen der Spannbacken (9,10) relativ zueinander und/oder relativ zum Grundkörper (4) und zum Bewegen der Spannvorrichtung (1) innerhalb einer Werkzeugmaschine umfasst.

3. Spannvorrichtung (1) nach Anspruch 2, **dadurch gekennzeichnet, dass** die Antriebsvorrichtung (15) eine Hub-/Senkvorrichtung (14) zum Versenken der mindestens einen Spannbacke (9, 10) unter die Materialauflagefläche (5) umfasst.

4. Spannvorrichtung (1) nach einem der vorhergehenden Ansprüche, **dadurch gekennzeichnet, dass** die zweite Spannbacke (10) als Festanschlag ausgebildet ist.

5. Spannvorrichtung (1) nach Anspruch 3, **dadurch gekennzeichnet, dass** die Hub-/Senkvorrichtung (14) einen Antriebskolben (26), einen Stempel (27), und ein Schubgestänge (18) umfasst.

6. Spannvorrichtung (1) nach Anspruch 5, **dadurch gekennzeichnet, dass** ein unterer Abschnitt des Schubgestänges (18) mit dem Stempel (27) drehbar gekoppelt ist und ein oberer Abschnitt des Schubgestänges (18) mit dem Festanschlag (10) drehbar gekoppelt ist, und der untere Abschnitt des Schubgestänges (18) in einem Führungsschlitz (18a) im Grundkörper (4) geführt ist.

7. Spannvorrichtung (1) nach Anspruch 5, **dadurch gekennzeichnet, dass** der Führungsschlitzes (18a) in einer Betriebsstellung des Festanschlages (10) einen Anschlag für das Schubgestänge (18) bildet, um den Festanschlag (10) in der Betriebsstellung zu fixieren.

8. Spannvorrichtung (1) nach einem der vorhergehenden Ansprüche, **dadurch gekennzeichnet, dass** die Materialauflagefläche (5) des Grundkörpers (4) durch eine oder mehrere Walzen oder Rollen (7) gebildet ist, auf denen ein Werkstück in einer Vorschubrichtung abrollbar ist.

9. Spannvorrichtung (1) nach einem der vorhergehenden Ansprüche, **dadurch gekennzeichnet, dass** die zweite Spannbacke (10) mit einem Steg (11) verbunden ist, wobei der Steg um eine Achse (12) schwenkbar ist, so dass die zweite Spannbacke unter die Materialauflagefläche (5) versenkbar ist.

10. Spannvorrichtung (1) nach Anspruch 6, **dadurch gekennzeichnet, dass** der Steg (11) auf der der zweiten Spannbacke gegenüberliegenden Seite des Grundkörpers (4) verschwenkbar gelagert ist.

11. Spannvorrichtung (1) nach Anspruch 6 oder 7, **dadurch gekennzeichnet, dass** der Grundkörper eine einer Unterseite des Steges (11) gegenüberliegende Auflagefläche (13) aufweist, auf der die Unterseite des Steges (11) im versenkten Zustand der zweiten Spannbacke (10) zu liegen kommt und durch die das Verschwenken des Steges (11) gegenüber dem Grundkörper (4) begrenzt wird.

12. Spannvorrichtung (1) nach Anspruch 4, **dadurch gekennzeichnet, dass** der Festanschlag (10) eine Platte oder eine oder mehrere Walzen oder Rollen (8) umfasst, an denen ein eingespanntes Werkstück in einer Betriebsstellung des Festanschlages (10) anliegt, und die in der Betriebsstellung des Festanschlages (10) senkrecht zu der Materialauflagefläche (5) verlaufen.

13. Spannvorrichtung (1) nach einem der vorhergehenden Ansprüche, **dadurch gekennzeichnet, dass** die Antriebsvorrichtung (15) einen Antrieb (25) und eine Kraftübertragungsvorrichtung (17), insbesondere ein Antriebsritzel (17), zur Bewegung der Spannvorrichtung (1) innerhalb einer Werkzeugmaschine aufweist.

14. Spannvorrichtung (1) nach einem der vorhergehenden Ansprüche, **dadurch gekennzeichnet, dass** die beweglichen Spannbacken (9) auswechselbar sind.

15. Spannvorrichtung (1) nach einem der vorhergehenden Ansprüche, **dadurch gekennzeichnet, dass** die Spannvorrichtung (1) durch eine Steuerungseinrichtung einer Werkzeugmaschine steuerbar ist.

16. Werkzeugmaschine umfassend:
mindestens eine Spannvorrichtung (1) nach einem der vorhergehenden Ansprüche; und
mindestens eine Bearbeitungseinrichtung mit einer Antriebsvorrichtung, insbesondere zum Verstellen oder Bewegen der Bearbeitungseinrichtung innerhalb der Werkzeugmaschine, wobei die Antriebsvorrichtungen (15) der Spannvorrichtung (1) und der Bearbeitungsvorrichtung voneinander unabhängig sind und jeweils ein Verstellen der Spannvorrichtung (1) relativ zu der Bearbeitungseinrichtung gestatten.
